# FASCICULE DE BREVET EUROPEEN

(11) **EP 3 212 829 B1**
(45) Date de publication et mention de la délivrance du brevet: **01.09.2021**
(21) Numéro de dépôt: 15798529.2
(22) Date de dépôt: 30.10.2015
(51) Int. Cl.: D01G 5/00, D01G 11/00

(54) **PROCÉDÉ ET DISPOSITIF DE DÉTISSAGE ET DE RÉALIGNEMENT DE FIBRES DE CARBONE**
VERFAHREN UND VORRICHTUNG ZUR ENTWEBUNG UND NEUAUSRICHTUNG VON KOHLENSTOFFFASERN
METHOD AND DEVICE FOR UNWEAVING AND REALIGNING CARBON FIBRES

(30) Priorité: 31.10.2014 FR 1460513
(43) Date de publication de la demande: 06.09.2017
(73) Titulaire: Université de Bordeaux, 33000 Bordeaux (FR); Institut Polytechnique de Bordeaux, 33402 Talence Cedex (FR); Centre National de la Recherche Scientifique (C.N.R.S.), 75016 Paris (FR)
(72) Inventeur: MANTAUX, Olivier, F-33140 Villenave d'Ornon (FR); GILLET, Arnaud, F-33550 Langoiran (FR); PEDROS, Matthieu, F-33000 Bordeaux (FR)
(74) Mandataire: Novagraaf Technologies
(86) Numéro de dépôt international: PCT/FR2015/052935
(87) Numéro de publication internationale: WO 2016/066975

(56) Documents cités:
- CN-U- 203 846 163
- FR-A1- 3 005 065
- JP-A- S5 739 272
- JP-A- H11 333 437
- JP-A- 2007 015 883
- US-A- 3 452 400
- None

## Description

La présente invention se rapporte à un procédé et un dispositif permettant le recyclage de fibres fragiles, comme par exemple des fibres de carbone, en vue de leur réutilisation sous une nouvelle forme.

Le recyclage de fibres de carbone issues de matériaux composites (séparation des fibres par rapport à une matrice en vue de la récupération des fibres) ne présente d'intérêt que si les fibres recyclées présentent une longueur décimétrique et si elles sont réalignées avec un fortement alignées afin de pouvoir réutiliser les fibres recyclées comme renfort dans un nouveau matériau composite. Les matériaux composites recyclés après élimination de plus de 98% de résine se présentent sous forme d'empilements de tissus de fibres de carbone de tailles et formes diverses impossibles à utiliser en l'état.

Le procédé de l'invention permet de séparer les fibres fragiles (par exemple de carbone) initialement entrecroisées ou entrelacées en tissus, de les réaligner et de les mettre sous forme de bandes continues de quelques centimètres de large ou de fils continus. Il est alors possible de les réutiliser pour réaliser de nouveaux matériaux composites soit telles-quelles après enduction de résine soit après réalisation de demiproduits de fibres de carbone recyclées (bandes préimprégnées de résine thermodurcissable ou thermoplastique, fibres reconstituées, voire retissées). Le procédé de l'invention est destiné à remettre en forme des fibres fragiles semi-longues (longueur comprise entre 10mm et 500mm) en vue de leur réutilisation sous une nouvelle forme ou de leur recyclage. La réutilisation ou le recyclage des fibres nécessitant une remise en forme est réalisé sans dégradation.

L'invention s'adapte également particulièrement à des morceaux de tissus issus de composites recyclés de tailles et de formes quelconques, compris à l'intérieur d'un rectangle de 1 mètre x 20 centimètres. Les morceaux de tissus peuvent être introduits en entrée seuls ou empilés jusqu'à 5 morceaux par exemple. Les morceaux de tissus peuvent être introduits dans n'importe quel sens en entrée. Des morceaux de tresse peuvent également être détissés à condition d'avoir subi au moins deux découpes longitudinales. Ce procédé transforme des morceaux de tissus de fibres de carbone en une bande continue de fibres de carbone réalignées avec un taux de réalignement important, soit un écart type d'alignement de l'ordre de 7°, ce qui signifie que 95% des fibres sont dans un intervalle +/- 14°, et non altérées mécaniquement ou en fils continus de telles fibres. Le procédé de séparation fibres/matrice permettant de récupérer les fibres de carbone est onéreux que ce soit par thermolyse, solvolyse ou bains de sels fondus et ne pourra être équilibré financièrement par le coût de traitement du déchet. Aujourd'hui les matériaux composites sont encore considérés comme des déchets banals et leur coût d'incinération ou d'enfouissement est relativement faible. Donc, un procédé de recyclage de fibres de carbone ne sera équilibré financièrement que par la vente de semi-produits réalisés avec les fibres de carbone recyclées. Or, seule une longueur des fibres de carbone décimétrique permet d'utiliser la résistance mécanique des fibres de carbone, l'utilisation de fibres de carbone courtes < 10mm ou non alignées ne permet pas de renforcement d'une matrice organique. En conséquence, seule la production de semi-produits de fibres de longueur >70 mm correctement alignées permettra une valorisation intéressante sur le plan mécanique des fibres de carbone recyclées. L'invention permet de remettre en forme des fibres de carbone recyclées semi longues et donc d'exploiter leur résistance dans des produits futurs.

Selon l'invention, le procédé de détissage et de réalignement de fibres, notamment de carbone, à partir de découpes de tissus avec des fils de chaîne et de trame comprend une étape de détissage des fibres à l'aide d'un module de détissage équipé de peignes comprenant des dents.

Le procédé est caractérisé en ce qu'il comprend :
- une étape de plaquage de la découpe de tissus sur un tapis adhérent au moyen d'un rouleau presseur, l'étape de plaquage est réalisée préalablement à l'étape de détissage des fibres,
- une étape de réalignement desdites fibres par contacts successifs sur au moins deux parois d'un premier module d'alignement animé d'un mouvement oscillant et présentant au moins deux chicanes constituées de plans inclinés par rapport à la verticale d'un angle respectif α et β tel que -90°<α<0° et 90°>β>0°, ledit premier module d'alignement présentant une ouverture en partie inférieure, et
- une étape de mise en forme de fils de fibres réalignées par un deuxième module d'alignement.

L'angle d'incidence des fibres lors du contact permet aux fibres de s'aligner. Le réalignement se fait grâce à une série de plaques en chicanes orientées de 0 à ±90°, de préférence de ±10° à ±80° par rapport à la verticale. On peut également prévoir une première paire de plaques avec un angle de 0 à 5°, par exemple, par rapport à la verticale, et une deuxième paire de plaques avec un angle de 10 à 80°. Les fibres s'alignent en tombant à travers le premier module en s'entrechoquant avec les chicanes. Le premier module est animé d'un mouvement vibrant vertical de fréquence comprise entre 10Hz et 200Hz par exemple pour éviter toute immobilisation des fibres entre les chicanes. Puisque le mouvement est vibrant verticalement, cela n'occasionne pas de désalignement des fibres. La sortie de la chicane sera dimensionnée à la taille de la bande de fibres visée par exemple 2,5cm de large.

Selon une disposition particulière, le deuxième module vibre avec une oscillation rotative. Il est ainsi possible de réaliser un fil de fibres réalignées avec un léger emmêlement des fibres permettant une meilleure cohésion.

Selon une autre disposition, le deuxième module est animé d'un mouvement rotatif.

Selon une troisième disposition, le deuxième module est animé d'un mouvement de translation. Après leur chute entre les chicanes, les fibres finissent par tomber alignées sur un tapis roulant qui constitue alors le deuxième module. Le tapis roulant avance pour former une bande de fibres réalignées.

Avantageusement, le procédé de l'invention comprend une étape d'ajout d'un liant, de préférence un liant polymère thermoplastique ou thermodurcissable. Le liant polymère permet d'assurer une cohésion des fibres. Le liant pourra par exemple être un polyamide ou une résine époxy.

Selon une première variante, le liant est un thermoplastique ajouté en même temps que les fibres à détisser. On ajoute le liant thermoplastique lors du détissage, ce liant est alors mélangé et mêlé aux fibres de carbone lors du réalignement. Il est positionné sur le module d'alimentation, à côté ou éventuellement par-dessus les tissus de carbone.

Selon une deuxième variante, le liant est ajouté à la sortie du premier module d'alignement. Le liant est un thermoplastique ou un thermodurcissable qui est ajouté après le premier module vibrant du premier module d'alignement grâce à une trémie disposée au dessus du tapis roulant et qui permet un mélange du liant avec les fibres de carbone.

Selon une disposition particulière, le liant est constitué de fibres thermoplastiques. On ajoute les fibres thermoplastiques lors du détissage, ces fibres sont alors mélangées et mêlées aux fibres de carbone lors du réalignement. Ces fibres peuvent avoir une longueur comprise entre 30mm et 500mm et se présenter sous n'importe quelle forme: morceaux de tissus simples, mats, ou fibres seules. Les fibres thermoplastiques sont détissées si nécessaire et réalignées simultanément aux fibres de carbone.

Selon une autre disposition, le liant est constitué de poudre thermoplastique ou thermodurcissable. De la poudre de thermoplastique ou thermodurcissable est pulvérisée par addition sur le premier module vibrant d'un ensemble constitué d'une trémie et d'un tamis. Une vibration du réservoir fait tomber de la poudre de thermoplastique qui se mélange aux fibres de carbone positionnées dans le module vibrant.

Selon une autre variante, le liant est ajouté à l'entrée du premier module d'alignement.

Avantageusement, le procédé de l'invention comprend une étape d'activation du liant polymère et de pressage. L'activation pourra être:
- un chauffage pour les thermoplastiques ou thermodurcissables,
- une irradiation pour les thermodurcissables,
- un four chauffant,
- des lampes rayonnantes,
- un rouleau chauffant,
- des lampes UV,
- un chauffage intégré sur les rouleaux de pressage,
- ou un générateur de micro-ondes.
On pourra ainsi réaliser des préformes avec des fibres détissées et le liant polymère.

L'invention porte également sur un dispositif de détissage et de réalignement de fibres, notamment de carbone, à partir de découpes de tissus avec des fils de chaîne et de trame, le dispositif comprend un module de détissage équipé de peignes comprenant des dents, et de deux grils, un premier gril et un deuxième gril.

Le dispositif est caractérisé : - en ce qu'il comprend un rouleau presseur à la sortie d'un tapis adhérent en amont du module de détissage,
- en ce qu'il comprend un premier module d'alignement configuré pour le réalignement desdites fibres et disposé sous les deux grils, et un deuxième module d'alignement configuré pour la mise en forme de fils de fibres réalignées et disposé en aval du premier module d'alignement,
- et en ce que le premier module d'alignement est animé d'un mouvement oscillant et présente au moins deux chicanes constituées de plans inclinés par rapport à la verticale d'un angle respectifs α et β tels que -90°<α<0° et 90°>β>0°, ledit premier module d'alignement présentant une ouverture en partie inférieure.

Le deuxième gril est un gril support, dont le rôle est de supporter les découpes de tissus pour faciliter la pénétration des dents des peignes, et le premier gril est un gril de détissage, qui permet de débarrasser les peignes des fibres. Les deux grils pourront être superposés ou non et décalés l'un en amont par rapport à l'autre. Dans le cas où les grils sont superposés le premier gril est situé en partie supérieure et le deuxième en partie inférieure sous le premier gril. Dans le dernier cas le premier gril est situé en aval et le deuxième en amont. Le premier grill va permettre de retirer les fils restés sur les peignes à la fin du détissage.

Le premier module d'alignement comprend un bac de réalignement constitué d'une série de plaques en chicanes orientées de 0 à ±90° par rapport à la verticale, de préférence ±10° à ±80°. Les fibres s'alignent en tombant à travers le bac et en s'entrechoquant avec les chicanes. Le bac du premier module d'alignement est sans fond et il surmonte un deuxième module.

Selon une caractéristique particulière, le deuxième module comprend un bac incliné réalisé en matériau souple comportant deux bords animés d'un mouvement oscillant vertical créant un mouvement rotatif au fond dudit bac. Le deuxième module est animé d'un mouvement oscillant rotatif obtenu par un mouvement vertical alterné de ses bords induisant un mouvement de « roulage » en fond de bac. Ce mouvement a pour effet d'apporter un léger emmêlement des fibres et de produire un fil.

Avantageusement, le deuxième module comprend un tapis roulant. Le tapis roulant est placé sous le bac de réalignement. Après leur chute entre les chicanes, les fibres finissent par tomber alignées sur le tapis roulant. Le tapis roulant avance pour former une bande de fibres réalignées.

Avantageusement, une trémie est disposée au dessus du premier module d'alignement. Cette trémie est micro-percée à son extrémité inférieure et fixée sur le premier module d'alignement. Elle est remplie de poudre polymère thermoplastique tel que du polyamide par exemple ou de thermodurcissable tel que de la résine époxy par exemple, ce qui permet d'ajouter de la poudre lors du réalignement pour ensuite chauffer et compacter la bande de fibres de carbone qui contiendra de préférence environ 0,5 à 5%, de préférence environ 2% de polymère.

Avantageusement, le deuxième module est suivi d'un tube rotatif. Ce tube rigide permet d'améliorer le mélange des fibres par son mouvement rotatif.

Selon une disposition particulière, le dispositif de l'invention comprend un moyen d'activation d'un liant disposé en aval du deuxième module. Les fibres constituent des bandes poudrées de thermoplastique ou thermodurcissable, en sortie de réalignement, elles sont activées et comprimées puis enroulées à l'intérieur d'un film thermoplastique anti-adhésif.

Avantageusement, le premier gril est réalisé avec des tiges rigides parallèles et le deuxième gril avec des tôles parallèles. Le deuxième gril est réalisé à l'aide de tôles parallèles placées verticalement au lieu de tiges. Ainsi, ce gril est plus rigide et peut être maintenu à une seule extrémité et peut donc être interrompu au niveau de la fin du détissage. Les tôles sont polies sur leur partie supérieure pour permettre le glissement des fibres de carbone lors du détissage.

Avantageusement, les tôles parallèles sont recourbées à leur extrémité aval. Ceci permet aux non détissés de tomber.

Avantageusement, un bac de récupération est disposé à l'extrémité aval du deuxième gril. Le bac de récupération est ajouté au niveau de l'extrémité recourbée du deuxième gril pour récupérer les non-détissés.

L'invention concerne également une bande de fibres de carbone recyclées alignées qui est caractérisée en ce que la longueur des fibres de carbone recyclées est comprise entre 20 et 250 mm, de préférence entre 100 et 250mm. Ces longueurs sont particulièrement intéressantes car plus faciles d'utilisation que les fibres de carbone recyclées habituellement obtenues.

Avantageusement, la bande comprend un liant polymère, tel qu'un liant polymère thermoplastique ou thermodurcissable. De préférence, la bande de fibres selon l'invention comprend environ 0,5 à 5% de liant polymère, en particulier environ 2%.

L'invention concerne aussi un fil continu de fibres de carbone recyclées alignées caractérisé en ce que la longueur des fibres de carbone recyclées est comprise entre 20 et 250 mm de préférence entre 100 et 250mm. Le fil continu est constitué de fibres de carbones recyclées regroupées en un fil de fibres. Les procédés actuels ne permettent pas d'obtenir de fil continu avec des fibres recyclées.

Avantageusement le fil continu comprend un liant polymère. Les fibres de carbone sont mélangées avec un liant polymère tel qu'un liant polymère thermoplastique ou thermodurcissable. Le liant polymère apporte une meilleure tenue des bandes ou des fils. De préférence, le fil de fibres selon l'invention comprend environ 0,5 à 5% de liant polymère, en particulier environ 2%.

Sauf précision contraire, les pourcentages dans la présente invention sont des pourcentages en masse.

Le terme environ, tel qu'utilisé dans la présente invention, désigne un intervalle s'étendant de ±10% autour de la valeur.

D'autres avantages pourront encore apparaître à l'homme du métier à la lecture des exemples ci-dessous, illustrés par les figures annexées, donnés à titre d'exemple.
- La figure 1 est une vue d'ensemble et de côté du dispositif selon l'invention,
- Les figures 2 et 2bis représentent le détail de l'outil de détissage vu de côté,
- La figure 3 représente le détail de l'outil de détissage vu de profil,
- La figure 4 est une vue de côté de la partie aval du dispositif selon un premier mode de réalisation de l'invention,
- La figure 5 est une vue de profil du second module vibrant,
- La figure 6 est une vue de côté de la partie aval du dispositif selon un second mode de réalisation,
- La figure 7 est une vue de profil du second mode de réalisation du second module vibrant,
- La figure 8 est une vue de profil d'un troisième mode de réalisation de l'invention,
- La figure 9 est une vue de profil de la figure 8,
- La figure 10 est une vue de côté d'un quatrième mode de réalisation de l'invention,
- La figure 11 est une vue des produits obtenus,
- La figure 12 est une vue de côté de la partie finale du dispositif.

On considérera que le haut est en haut des figures et que la partie amont se situe à l'entrée du dispositif et la partie aval en sortie.

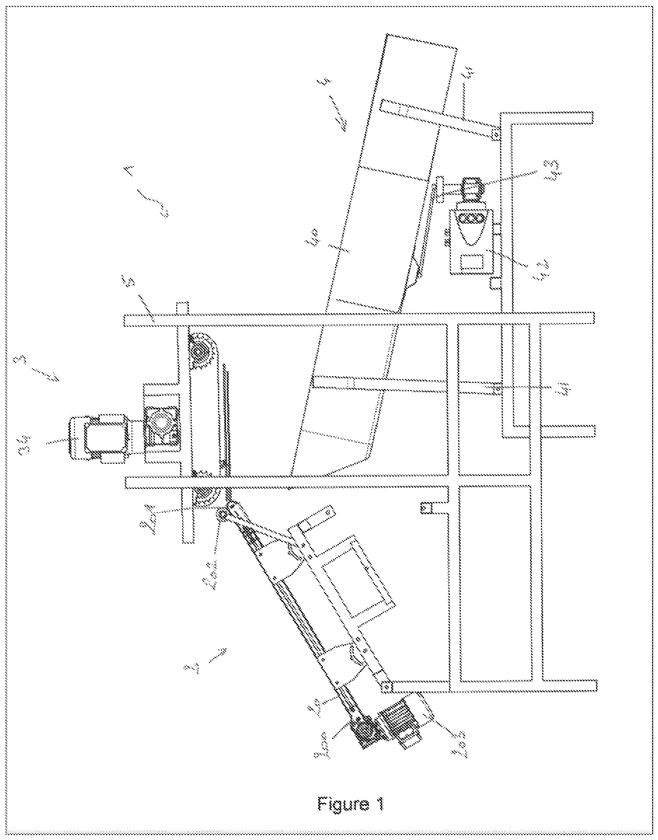

Le dispositif 1 illustré à la figure 1 comprend un module d'alimentation 2, un module de détissage 3 et un module de réalignement ou module vibrant 4. Les différents modules 2, 3 et 4 sont disposés sur une structure métallique 5.

Le module d'alimentation 2 comprend un tapis adhérent 20 réalisé avec des picots ou un PVC rugueux. Des découpes de tissu sont introduites au début 200 du tapis 20. Le tapis 20 présente une certaine inclinaison pour réduire l'encombrement du module et permettre une alimentation à portée d'homme tout en réalisant le détissage dans la partie haute du module de détissage 3. A la sortie 201 du tapis 20, un rouleau presseur 202 impose une certaine pression afin de faire adhérer la découpe de tissu lors de son avancement dans le module de détissage 3. Le tapis 20 est entraîné par un moteur électrique 203.

Le module de détissage 3 comprend :
- des peignes métalliques 30 montés sur une chaîne de convoyage 31 tournant autour d'au moins une poulie,
- deux séries de lignes parallèles 320 et 330 disposées sous la chaîne de convoyage 31 et constituant un premier gril 32 et un deuxième gril 33,
- un moteur électrique d'entraînement 34 de la chaîne de convoyage 31.

Un premier module d'alignement 4 comporte un système vibrant 44 constitué ici d'un bac oscillant 40 disposé sur des lames souples 41, ici quatre, et un moteur électrique 42 relié à la goulotte 40 par un système de bielle manivelle 43 afin d'imposer une oscillation à ladite goulotte 40.

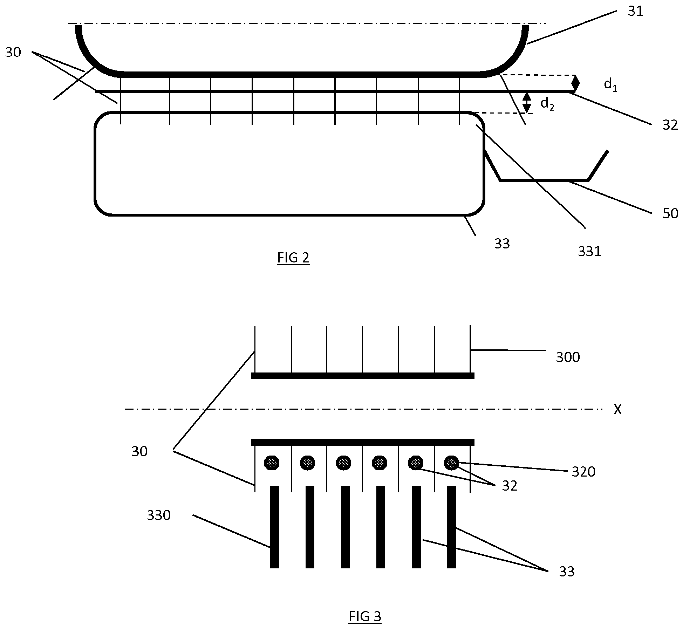

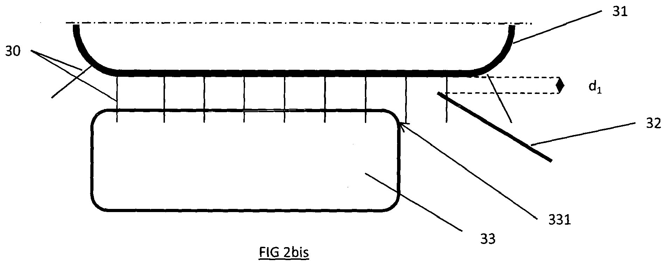

Les figures 2, 2bis et 3 montrent le détail des peignes 30 et des deux grils 32 et 33 de lignes parallèles 320 et 330. Chaque peigne 30 présente plusieurs dents 300. Un bac 50 est ajouté à l'extrémité du deuxième gril 33 qui présente une forme recourbée en aval 331 pour éviter aux non-détissés de rejoindre les fibres détissées. Le premier gril 32 de détissage est réalisé ici avec des tiges 320 rigides de gros diamètre (4 à 6mm) de façon à avoir une distance maximum d₁ de 2mm entre les peignes 30 et le premier gril 32 sur toute la longueur de détissage quand les grils sont superposés (figure 2) ou sur au moins une partie de la longueur de détissage de préférence à la fin du détissage (figure 2bis).

Le premier gril 32 est dense : il y a une tige 320 entre chaque dent 300. Le deuxième gril 33 de maintien est réalisé à l'aide de tôles parallèles 330 placées verticalement au lieu de tiges comme sur le premier gril 32. Ainsi, ce deuxième gril 33 est plus rigide et peut être maintenu à une seule de ses extrémités, l'extrémité amont, et peut donc être interrompu au niveau de la fin du détissage. Les tôles 330 sont polies ou recouvertes d'un film plastique sur leur partie supérieure pour permettre le glissement des fibres de carbone lors du détissage. Les tôles 330 sont recourbées à leur extrémité 331 pour permettre aux non détissés de tomber.

Comme ce deuxième gril 33 est rigide, cela permet de limiter le jeu entre les deux grils superposés de la figure 2 à une distance d₂ de 5 mm maximum et d'améliorer le détissage des tissus serrés ou empilés.

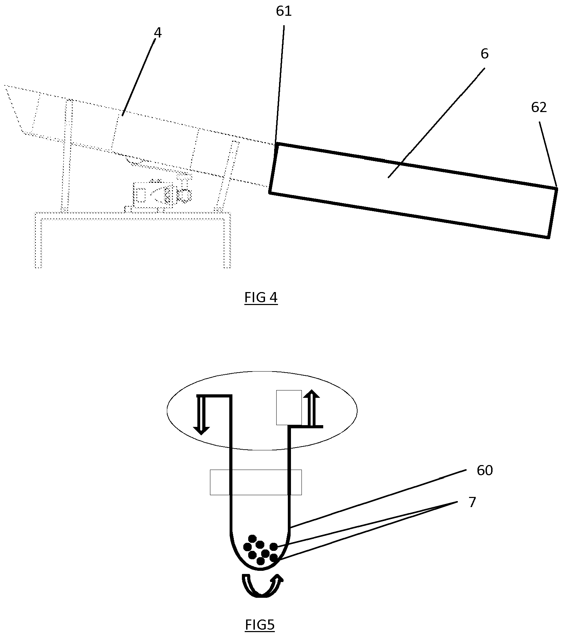

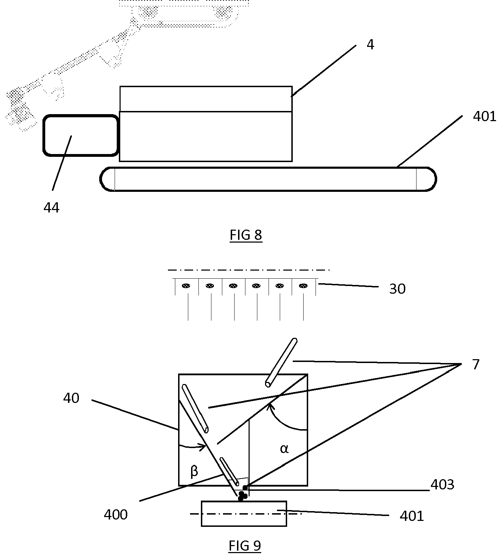

On voit à la figure 4 que le premier module 4 comprend un bac concave 40 avec un fond plat de 50mm de large (par exemple) permettant de réaliser des bandes de fibres réalignées de 50mm de large (par exemple). Le premier module selon l'invention est constitué d'un premier module 4 tel que décrit aux figures 8 et 9. Un deuxième module 6 est placé en aval du premier module 4 et permet de réaliser des fils de fibres réalignées, par exemple de 25mm de diamètre, avec un léger emmêlement des fibres 7 permettant une meilleure cohésion. Le premier module 4 a un mouvement oscillant horizontal basse fréquence, il est complété par le deuxième module 6 qui est animé d'un mouvement différent du premier module 4. Le deuxième module 6 comprend un bac de réalignement 60 concave et souple, placé en aval du premier module 4, sur la figure 4 une extrémité 61 est fixé au premier module 4 et son extrémité 62 est libre, dans l'invention il sera placé en dessous de l'ouverture du premier module 4. Comme le bac 60 est souple, il est possible de l'animer d'un mouvement différent du bac 40. Le bac 60 est animé d'un mouvement oscillant vertical alterné induisant un mouvement de « roulage » en fond de bac. Ce mouvement a pour effet d'apporter un léger emmêlement des fibres 7 et de produire un fil.

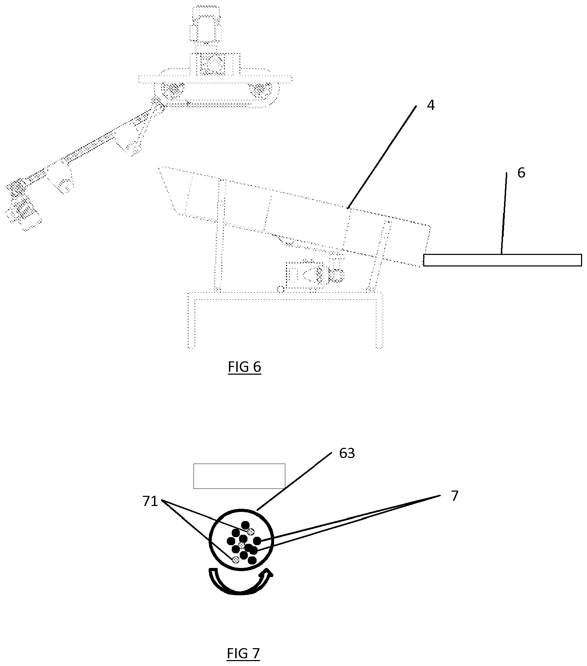

Les figures 6 et 7 montrent un second mode de réalisation. Le deuxième module 6 comprend un tube rotatif 63 animé d'un mouvement rotatif.

Les figures 8 et 9 illustrent un troisième mode de réalisation, le premier module vibrant 4 comprend un bac 40 sans fond ou avec une ouverture 403 constitué d'une série de plaques 400 en chicanes, les fibres 7 réalignées tombent ensuite sur un tapis roulant 401 disposé en dessous du bac 40. Les plaques 400 en chicanes sont chacune orientée d'un angle α et β opposés de 0 à 90° et de préférence de ±10° à ±80° par rapport à la verticale. Les fibres 7 s'alignent en tombant à travers le bac 40 et s'entrechoquent avec les chicanes 400. Comme le bac 40 n'a pas de fond, les fibres 7 chutent entre les chicanes et finissent par tomber alignées sur le tapis roulant 401. Le tapis roulant en avançant va former une bande de fibres 7 réalignées. Le bac 40 est animé d'un mouvement vibrant vertical de fréquence comprise entre 10Hz et 200Hz pour éviter toute immobilisation des fibres entre les chicanes. Puisque le mouvement est vibrant verticalement, cela n'occasionne pas de désalignement des fibres.

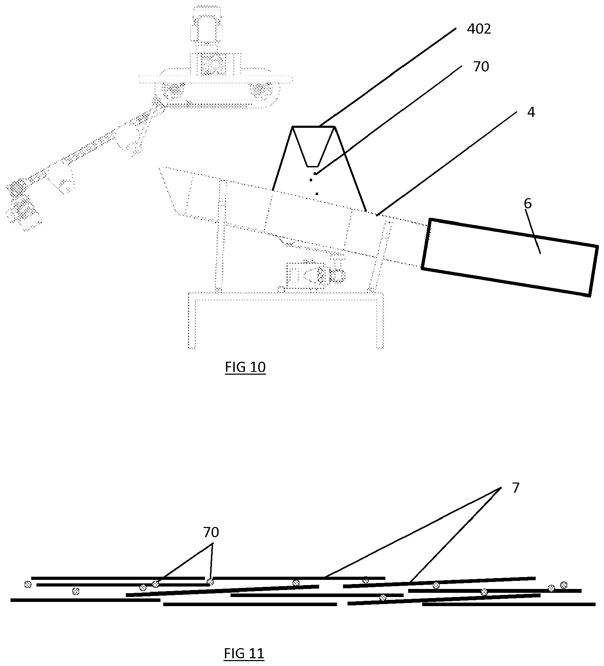

La figure 10 montre un quatrième mode de réalisation où on fixe une trémie 402 micro-percée sur le premier module de réalignement 4. Cette trémie 402 est remplie de poudre thermoplastique 70 comme par exemple du polyamide. La trémie 402 est micro-percée à son extrémité inférieure. Le module de réalignement 4 en vibrant fait ainsi tomber de la poudre de thermoplastique 70 de la trémie 402 micro-percée et tombe dans le bac de réalignement avec les fibres 7. La poudre de thermoplastique se mélange aux fibres de carbone lors du réalignement. Il est aussi possible d'utiliser un thermodurcissable.

Il est aussi possible d'utiliser des fibres thermoplastiques 71, en polyamide par exemple. Elles sont positionnées sur le module d'alimentation 2, à côté ou éventuellement par-dessus les tissus de carbone. Ces fibres 71 peuvent avoir une longueur comprise entre 30mm et 500mm et se présenter sous n'importe quelle forme (sauf tricot) (morceaux de tissus simples, mats, ou fibres seules ...). Les fibres de thermoplastiques 71 sont détissées et réalignées simultanément aux fibres de carbone. Lors du réalignement, le premier module 4 mêle les fibres de carbone 7 aux fibres thermoplastiques 71. Le second module 6 comprendra de préférence un tube rotatif 63 rigide et tournant autour d'un axe horizontal pour améliorer le mélange des fibres 7 et 71.

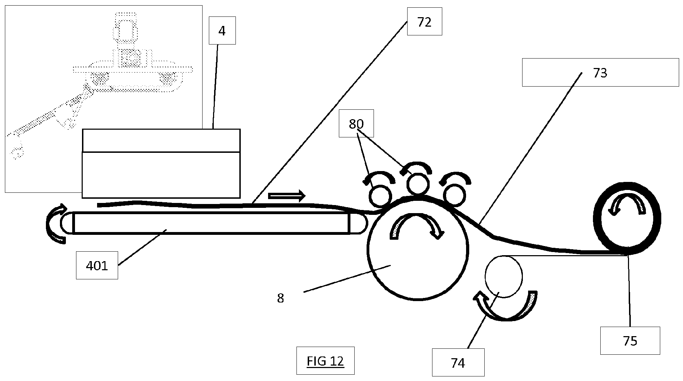

La figure 12 montre la partie aval du dispositif. Le tapis roulant 401 transporte une bande 72 continue de fibres 7 de carbone semi-longues contenant de la poudre de thermoplastique 70 et/ou des fibres thermoplastiques 71. A l'extrémité du tapis roulant 401, la bande 72 de fibres de carbone est déposée sur un rouleau 8 tournant chauffé à une température supérieure à la température de fusion de la poudre thermoplastique 70 ou des fibres thermoplastiques 71. Ainsi, la poudre et/ou les fibres thermoplastiques fondent. En tournant, le rouleau 8 chauffant convoie la bande 72 qui est alors comprimée entre des rouleaux presseurs 80 et le rouleau 8 chauffant, ce qui conduit la poudre de thermoplastique fondue à coller les fibres de carbone entre elles : les fibres sont consolidées en une bande consolidée 73. La bande consolidée 73 est déposée dans un film thermoplastique 74 qui avance à la même vitesse que le tapis roulant 401. La bande consolidée 74 est enroulée sur un rouleau amovible 75 à l'intérieur de son film thermoplastique 74.

Nous allons maintenant décrire le mode de fonctionnement du dispositif 1 et le procédé de détissage et d'alignement correspondant.

Les découpes de tissus utilisées introduites en entrée sont de nature variable, en termes de masse surfacique et de type d'armure. Le module d'alimentation 2 joue le rôle de tampon et permet à l'opérateur d'introduire une quantité importante de découpes de tissus empilées, qui seront ensuite transférées de façon progressive sur les modules suivants. Il est possible de détisser plusieurs découpes en même temps en particulier si celles-ci sont fines. La limite est liée à la distance entre les grils 32 et 33, il faut que la ou les découpes puissent passer entre ces deux grils 32 et 33.

Le détissage est réalisé grâce aux peignes 30 qui sont de préférence métalliques et montés sur les chaînes de convoyage 31, mais ils peuvent être montés sur n'importe quel autre dispositif donnant un mouvement oblong autre tapis, courroies, câbles.... La vitesse de rotation du moteur 34 est choisie de façon à ce que la vitesse linéaire des peignes 30 soit 10 fois plus élevée que la vitesse du tapis 20. Les dents 300 pénètrent dans la découpe de tissu et entraînent une fraction de sa trame. La découpe est maintenue sur la série de lignes parallèles 33 qui forment une grille, afin de garantir la pénétration des dents 300 dans la trame. Lorsque les dents 300 sont en prise dans une découpe, elles exercent une traction sur le tissu qui est compensée par le rouleau presseur 201 qui plaque la découpe sur le tapis 20. Ce système est très efficace même si la surface de tissus pincée par le rouleau presseur 201 est faible. Les non-détissés sont récupérés dans bac 50 pour les empêcher de tomber dans le bac d'alignement et les réintroduire en entrée de machine.

Une fois les fibres détissées, elles chutent par gravité dans le bac 40 monté sur les lames souples 41 qui constituent ainsi des ressorts. L'oscillation est un mouvement alternatif d'amplitude et de fréquence définies qui conduisent les fibres à s'orienter rapidement par des chocs successifs desdites fibres sur les parois des chicanes 400. Le mouvement est obtenu avec un système vibrant 44 constitué par exemple d'un moteur électrique 42 et d'un système bielle manivelle 43. Un variateur de vitesse permet d'ajuster la fréquence des oscillations. Le mouvement oscillant ainsi que l'inclinaison de la goulotte 40 permettent aux fibres de s'aligner, et de former une bandelette. Le deuxième bac 60 permet de réaliser un fil de fibres réalignées avec un léger emmêlement des fibres 7 permettant une meilleure cohésion.

Dans le troisième mode de réalisation, le système de réalignement permet une récupération automatique et en continu des bandes de fibres. Une récupération en continu des bandes permettra en outre d'éviter le désalignement lors de la récupération manuelle des fibres.

Pour améliorer la tenue des fibres 7, on ajoute un liant polymère, par exemple un liant polymère thermoplastique, qui permet de réaliser une bande de fibres de carbone consolidée après avoir été fondu puis solidifié. Ainsi les bandes poudrées de liant polymère, en sortie de réalignement, sont chauffées et comprimées puis enroulées à l'intérieur d'un film thermoplastique anti-adhésif.

On réalise un convoyage, une consolidation et un enroulement de la bande de fibres de carbone recyclées. Ainsi la bande de fibres de carbone semi-continues ou le fil continu devient un semi-produit continu sous forme de rouleau, directement utilisable par les industriels du matériau composite pour découper à façon et positionner au fond d'un moule avant imprégnation de résine.

En résumé, le dispositif selon l'invention est constitué d'un premier module d'alignement 4 constitué d'un bac sans fond avec des chicanes suivi d'un deuxième module d'alignement dans lequel les fibres tombent. Ce deuxième module d'alignement est constitué soit d'un bac rigide oscillant horizontalement avec un bac souple avec mouvement roulant et éventuellement suivi par un tube rotatif pour la production de fil, soit d'un tapis roulant avec optionnellement un système d'activation du liant pour la production de bandes plates, consolidées en option.

## Revendications

1. Procédé de détissage et de réalignement de fibres, notamment de carbone, à partir de découpes de tissus avec des fils de chaîne et de trame comprenant une étape de détissage des fibres à l'aide d'un module de détissage (3) équipé de peignes (30) comprenant des dents (300), le procédé étant **caractérisé en ce qu'**il comprend :
- une étape de plaquage de la découpe de tissus sur un tapis adhérent (20) au moyen d'un rouleau presseur (202), l'étape de plaquage étant réalisée préalablement à l'étape de détissage des fibres,
- une étape de réalignement desdites fibres par contacts successifs sur au moins deux parois d'un premier module d'alignement (4) animé d'un mouvement oscillant et présentant au moins deux chicanes (400) constituées de plans inclinés par rapport à la verticale d'un angle respectif α et β tel que -90°<α<0° et 90°>β>0°, ledit premier module d'alignement (4) présentant une ouverture (403) en partie inférieure, et
- une étape de mise en forme de fils de fibres réalignées par un deuxième module d'alignement (6).

2. Procédé selon la revendication 1, **caractérisé en ce que** le deuxième module d'alignement (6) est animé d'un mouvement de translation.

3. Procédé selon une des revendications précédentes, **caractérisé en ce qu'**il comprend une étape d'ajout d'un liant polymère thermoplastique ou thermodurcissable.

4. Procédé selon la revendication précédente, **caractérisé en ce que** le liant (70, 71) est un thermoplastique ajouté en même temps que les fibres (7) à détisser.

5. Procédé selon la revendication 3, **caractérisé en ce que** le liant est ajouté à la sortie du premier module d'alignement (4).

6. Procédé selon la revendication 4, **caractérisé en ce que** le liant est constitué de fibres thermoplastiques (71).

7. Procédé selon la revendication 5, **caractérisé en ce que** le liant est constitué de poudre thermoplastique (70).

8. Procédé selon la revendication 4, **caractérisé en ce que** le liant est ajouté à l'entrée du premier module d'alignement (4).

9. Procédé selon une des revendications 3 à 8, **caractérisé en ce qu'**il comprend une étape d'activation du liant polymère et de pressage.

10. Dispositif de détissage et de réalignement de fibres, notamment de carbone, à partir de découpes de tissus avec des fils de chaîne et de trame, le dispositif comprenant un module de détissage (3) équipé de peignes (30) comprenant des dents (300), et de deux grils (32, 33), un premier gril (32) de détissage prévu pour débarrasser les peignes (30) des fibres et un deuxième gril (33) de maintien des découpes de tissus pour faciliter la pénétration des dents (300) des peignes (30), le dispositif étant **caractérisé :**
- **en ce qu'**il comprend un rouleau presseur (202) à la sortie d'un tapis adhérent (20) en amont du module de détissage (3),
- **en ce qu'**il comprend un premier module d'alignement (4) configuré pour le réalignement desdites fibres et disposé sous les deux grils (32, 33), et un deuxième module d'alignement (6) configuré pour la mise en forme de fils de fibres réalignées et disposé en aval du premier module d'alignement (4),
- et **en ce que** le premier module d'alignement (4) est animé d'un mouvement oscillant et présente au moins deux chicanes (400) constituées de plans inclinés par rapport à la verticale d'un angle respectif α et β tel que - 90°<a<0° et 90°>β>0°, ledit premier module d'alignement (4) présentant une ouverture (403) en partie inférieure.

11. Dispositif selon la revendication précédente, **caractérisé en ce que** le deuxième module d'alignement (6) comprend un bac incliné (60) réalisé en matériau souple comportant deux bords animés d'un mouvement oscillant vertical créant un mouvement rotatif au fond dudit bac.

12. Dispositif selon la revendication 10, **caractérisé en ce que** le deuxième module d'alignement (6) comprend un tapis roulant (401).

13. Dispositif selon une des revendications 10 à 12, **caractérisé en ce que** le deuxième module d'alignement (6) est suivi d'un tube rotatif (63).

14. Dispositif selon une des revendications 10 à 12, **caractérisé en ce qu'**il comprend un moyen d'activation d'un liant disposé en aval du deuxième module d'alignement (6).

15. Dispositif selon une des revendications 10 à 14, **caractérisé en ce que** le premier gril (32) est réalisé avec des tiges rigides parallèles (320) et le deuxième gril (33) avec des tôles parallèles (330).

## Patentansprüche

1. Verfahren zum Entwirren und Neuausrichten von Fasern, insbesondere Kohlenstofffasern, aus Stoffzuschnitten mit Kett- und Schussfäden, umfassend einen Schritt des Entwirrens der Fasern durch ein Entwirrungsmodul (3), das mit Zähne (300) umfassenden Kämmen (30) ausgestattet ist, wobei das Verfahren **dadurch gekennzeichnet ist, dass** es umfasst:
- einen Schritt des Plattierens des auf einer Haftmatte (20) geschnittenen Gewebes mittels einer Druckwalze (202), wobei der Schritt des Plattierens vor dem Schritt des Entwirren von Fasern ausgeführt wird,
- einen Schritt des Neuausrichtens der Fasern durch aufeinanderfolgende Kontakte an mindestens zwei Wänden eines ersten Ausrichtmoduls (4), das durch eine oszillierende Bewegung angetrieben wird und mindestens zwei Schikanen (400) aufweist, die aus Ebenen bestehen, die in Bezug auf die Vertikale um einen jeweiligen Winkel α und β geneigt sind, so dass -90°<α<0° und 90°>ß>0°, wobei das erste Ausrichtmodul (4) eine Öffnung (403) im unteren Teil aufweist, und
- einen Schritt des Formens der neu ausgerichteten Faserfäden durch ein zweites Ausrichtmodul (6).

2. Verfahren nach Anspruch 1, **dadurch gekennzeichnet, dass** das zweite Ausrichtmodul (6) in eine translatorische Bewegung versetzt wird.

3. Verfahren nach einem der vorhergehenden Ansprüche, **dadurch gekennzeichnet, dass** es einen Schritt des Zugebens eines thermoplastischen oder duroplastischen Polymerbindemittels umfasst.

4. Verfahren nach dem vorhergehenden Anspruch, **dadurch gekennzeichnet, dass** das Bindemittel (70, 71) ein thermoplastischer Kunststoff ist, der zusammen mit den zu entwirrenden Fasern (7) zugegeben wird.

5. Verfahren nach Anspruch 3, **dadurch gekennzeichnet, dass** das Bindemittel am Auslass des ersten Ausrichtmoduls (4) zugegeben wird.

6. Verfahren nach Anspruch 4, **dadurch gekennzeichnet, dass** das Bindemittel aus thermoplastischen Fasern (71) besteht.

7. Verfahren nach Anspruch 5, **dadurch gekennzeichnet, dass** das Bindemittel aus thermoplastischem Pulver (70) besteht.

8. Verfahren nach Anspruch 4, **dadurch gekennzeichnet, dass** das Bindemittel in den Einlass des ersten Ausrichtmoduls (4) gegeben wird.

9. Verfahren nach einem der Ansprüche 3 bis 8, **dadurch gekennzeichnet, dass** es einen Schritt des Aktivierens des polymeren Bindemittels und des Pressens umfasst.

10. Vorrichtung zum Entwirren und Neuausrichten von Fasern, insbesondere Kohlenstofffasern, aus Stoffzuschnitten mit Kett- und Schussfäden, wobei die Vorrichtung ein Entwirrungsmodul (3) umfasst, das mit Zähne (300) umfassenden Kämmen (30) ausgestattet ist,
und mit zwei Gittern (32, 33), wobei ein erstes Gitter (32) zur Entwirrung, um die Kämme (30) von den Fasern zu befreien und ein zweites Gitter (33) zur Haltung der Gewebestücke, um das Eindringen der Zähne (300) der Kämme (30) zu erleichtern, vorgesehen ist, wobei die Vorrichtung **dadurch gekennzeichnet ist:**
- **dass** sie eine Andruckrolle (202) am Auslass eines Klebebandes (20) stromaufwärts des Entwirrungsmoduls (3) umfasst,
- **dass** sie ein erstes Ausrichtmodul (4), das für die Neuausrichtung der Fasern konfiguriert und unter den beiden Gittern (32, 33) angeordnet ist, und ein zweites Ausrichtmodul (6) umfasst, das für die Formung von Fäden der neu ausgerichteten Fasern konfiguriert und stromabwärts des ersten Ausrichtmoduls (4) angeordnet ist,
- und **dass** das erste Ausrichtmodul (4) durch eine oszillierende Bewegung angetrieben wird und mindestens zwei Schikanen (400) aufweist, die aus Ebenen bestehen, die in Bezug auf die Vertikale um einen jeweiligen Winkel α und β geneigt sind, so dass -90°<α<0° und 90°>ß>0°, wobei das erste Ausrichtmodul (4) an der Unterseite eine Öffnung (403) aufweist.

11. Vorrichtung nach dem vorhergehenden Anspruch, **dadurch gekennzeichnet, dass** das zweite Ausrichtmodul (6) eine geneigte Schale (60) aus flexiblem Material umfasst, die zwei Kanten aufweist, die durch eine vertikale oszillierende Bewegung animiert werden, die eine Rotationsbewegung am Boden der Schale erzeugt.

12. Vorrichtung nach Anspruch 10, **dadurch gekennzeichnet, dass** das zweite Ausrichtmodul (6) ein Förderband (401) umfasst.

13. Vorrichtung nach einem der Ansprüche 10 bis 12, **dadurch gekennzeichnet, dass** auf das zweite Ausrichtmodul (6) ein rotierendes Rohr (63) folgt.

14. Vorrichtung nach einem der Ansprüche 10 bis 12, **dadurch gekennzeichnet, dass** sie eine Einrichtung zum Aktivieren eines Bindemittels aufweist, die stromabwärts des zweiten Ausrichtmoduls (6) angeordnet ist.

15. Vorrichtung nach einem der Ansprüche 10 bis 14, **dadurch gekennzeichnet, dass** das erste Gitter (32) mit parallelen starren Stäben (320) und das zweite Gitter (33) mit parallelen Blechen (330) hergestellt ist.

## Claims

1. Method for unweaving and realigning fibers, notably carbon fibers, from offcuts of fabric having warp and weft yarns comprising a step of unweaving the fibers using an unweaving module (3) provided with combs (30) comprising teeth (300), the method being **characterized in that** it comprises:
- a step of pressing the offcuts of fabric onto a sticky belt (20) using a press roller (202), the step of pressing being performed prior to the step of unweaving the fibers,
- a step of realigning said fibers by successive contacts with at least two walls of a first alignment module (4) driven in an oscillatory movement and having at least two deflectors (400) made up of planes that are inclined with respect to the vertical by a respective angle α and β such that 90°<a<0° and 90°>β>0°, said alignment module (4) having an opening (403) in the lower part, and
- a step of shaping yarns of realigned fibers by a second alignment module (6).

2. Method as claimed in claim 1, **characterized in that** the second alignment module (6) is driven in a translational movement.

3. Method as claimed in one of the preceding claims, **characterized in that** it comprises a step of adding a thermoplastic or thermosetting polymer binder.

4. Method as claimed in the preceding claim, **characterized in that** the binder (70, 71) is a thermoplastic added at the same time as the fibers (7) that are to be unwoven.

5. Method as claimed in claim 3, **characterized in that** the binder is added at the outlet from the first alignment module (4).

6. Method as claimed in claim 4, **characterized in that** the binder consists of thermoplastic fibers (71).

7. Method as claimed in claim 5, **characterized in that** the binder consists of thermoplastic powder (70).

8. Method as claimed in claim 5, **characterized in that** the binder is added at the inlet of the first alignment module (4).

9. Method as claimed in one of claims 3 to 8, **characterized in that** it comprises a step of activating the polymer binder and of pressing.

10. Device comprising a tool of unweaving and realignment fibers, such as carbon, from offcuts of fabric having warp and weft yarns, the device comprising an unweaving module (3) provided with combs (30) comprising teeth (300) and two grids (32, 33), a first grid (32) for unweaving provided to clear the combs (30) of fibers and a second grid (33) for retaining the offcuts to facilitate the penetration of the teeth of the combs, the device being **characterized**
- **in that** it comprises a press roller (202) at the outlet from a sticky belt (20) upstream of the unweaving module (3),
- **in that** it comprises a first alignment module (4) configured for realigning said fibers and arranged under the two grids (32, 33), and a second alignment module (6) positioned downstream of the first alignment module (4), and in that the first alignment module (4) driven in an oscillatory movement and having at least two deflectors (400) made up of planes that are inclined with respect to the vertical by a respective angle α and β such that 90°<a<0° and 90°>β>0°, said alignment module (4) having an opening (403) in the lower part.

11. Device as claimed in the preceding claim, **characterized in that** the second alignment module (6) comprises an inclined tray (60) made of a flexible material having two edges driven in a vertical oscillatory movement creating a rotary movement at the bottom of said tray.

12. Device as claimed in claim 10, **characterized in that** the second module comprises a conveyor belt (401) .

13. Device as claimed in one of claims 10 to 12, **characterized in that** the second alignment module (6) is followed by a rotary tube (63).

14. Device as claimed in one of claims 10 to 12, **characterized in that** it comprises a means of activating a binder positioned downstream of the second alignment module (6) .

15. Device as claimed in one of claims 10 to 14, **characterized in that** the first grid (32) is produced with parallel rigid rods (320) and the second grid (33) with parallel plates (330).
